# EUROPEAN PATENT APPLICATION

(11) **EP 4 451 188 A1**
(43) Date of publication of application: **23.10.2024**
(21) Application number: 22907391.1
(22) Date of filing: 09.12.2022
(51) Int. Cl.: G06Q 10/083, B65G 61/00

(54) **INFORMATION PROCESSING DEVICE, TRANSPORTER, AND TRANSPORT MANAGEMENT SYSTEM**

(30) Priority: 17.12.2021 JP 2021205553
(71) Applicant: Panasonic Intellectual Property Management Co., Ltd., Kadoma-shi, Osaka 571-0057 (JP)
(72) Inventor: YAMAUCHI, Kazuhiko, Yokohama-shi, Kanagawa 224-8520 (JP); HIROSAWA, Chie, Kadoma-shi, Osaka 571-8501 (JP); TOYOKITA, Yukihiro, Kadoma-shi, Osaka 571-8501 (JP); JOHN, Stephen William, Kadoma-shi, Osaka 571-8501 (JP); YAMAUCHI, Masaki, Kadoma-shi, Osaka 571-8501 (JP)
(74) Representative: Eisenführ Speiser
(86) International application number: PCT/JP2022/045539
(87) International publication number: WO 2023/112864

(57) **Abstract**

An information processing apparatus according to one aspect of the present disclosure is an information processing apparatus that manages a conveyance body that sequentially conveys one or more articles to a pickup site of the article, and includes an acquisition unit, a determination unit, and an adjustment unit. The acquisition unit acquires, via the conveyance body, operation information representing an operation related to a consignee's receipt at the pickup site. The determination unit determines a type of the consignee on the basis of the information acquired by the acquisition unit. The adjustment unit adjusts a conveyance plan of the article to be conveyed to the next pickup site in accordance with the determination result of the determination unit.

## Description

### TECHNICAL FIELD

The present disclosure relates to an information processing apparatus, a conveyance body, and a conveyance management system that sequentially deliver articles to plural orderers.

### BACKGROUND ART

In recent years, a business of ordering an article at an ordering site on a network and delivering the article to a home or a residence has been expanded. By the way, as the number of deliveries increases, a working environment problem of a deliverer occurs, and a deviation from the users' need to receive at night also occurs. Conventionally, in order to solve the above-described problem, there is a system that an autonomous mobile body delivers a delivery to a home in response to a request of a user (for example, Patent Document 1).

### CITATION LIST

### Patent Literature

### Patent Document 1: JP 2019-153211 A

### SUMMARY OF INVENTION

The present disclosure provides an information processing apparatus, a conveyance body, and a conveyance management system capable of suppressing a conveyance delay by appropriately responding to a delay factor regarding detection and determination of a delay factor occurring when an article is conveyed, a trouble during conveyance, and the like.

An information processing apparatus according to one aspect of the present disclosure is an information processing apparatus that manages a conveyance body that sequentially conveys one or more articles to a pickup site of the article, and includes an acquisition unit, a determination unit, and an adjustment unit. The acquisition unit acquires, via the conveyance body, operation information representing an operation related to a consignee's receipt at the pickup site. The determination unit determines a type of the consignee on the basis of the information acquired by the acquisition unit. The adjustment unit adjusts a conveyance plan of the article to be conveyed to the next pickup site in accordance with the determination result of the determination unit.

### BRIEF DESCRIPTION OF DRAWINGS

FIG. 1 is a system configuration diagram illustrating an example of a conveyance management system according to a first embodiment;
FIG. 2 is a block diagram illustrating an example of a hardware configuration of the information processing apparatus according to the first embodiment;
FIG. 3 is a block diagram illustrating an example of a functional configuration of the information processing apparatus according to the first embodiment;
FIG. 4 is a table illustrating an example of article information according to the first embodiment;
FIG. 5 is a schematic diagram illustrating an example of notification content to a user terminal according to the first embodiment;
FIG. 6 is a schematic diagram illustrating an example of notification content to the user terminal according to the first embodiment;
FIG. 7 is a table illustrating an example of types of consignees according to the first embodiment;
FIG. 8 is a table illustrating an example of an operation instruction of a conveyance body according to the first embodiment;
FIG. 9 is a schematic diagram illustrating an example of notification content to the user terminal according to the first embodiment;
FIG. 10 is a schematic diagram illustrating an example of notification content to the user terminal according to the first embodiment;
FIG. 11 is a schematic diagram illustrating an example of notification content to the user terminal according to the first embodiment;
FIG. 12 is a schematic diagram illustrating an example of notification content to the user terminal according to the first embodiment;
FIG. 13 is a sequence diagram illustrating an example of processing executed in the conveyance management system according to the first embodiment;
FIG. 14 is a sequence diagram illustrating an example of a procedure of processing executed in the conveyance management system according to the first embodiment;
FIG. 15 is a flowchart illustrating an example of processing executed in the information processing apparatus according to the first embodiment;
FIG. 16 is a schematic diagram illustrating an example of content displayed in the remote monitoring apparatus according to the first embodiment;
FIG. 17 is a system configuration diagram illustrating an example of a conveyance management system according to a second embodiment;
FIG. 18 is a block diagram illustrating an example of a hardware configuration of an information processing apparatus according to the second embodiment; and
FIG. 19 is a block diagram illustrating an example of a functional configuration of the information processing apparatus according to the second embodiment.

### DESCRIPTION OF EMBODIMENTS

Hereinafter, embodiments of an information processing apparatus, a conveyance body, and a conveyance management system according to the present disclosure will be described in detail with reference to the drawings. In each of the following embodiments, the same reference numerals are given to the same parts, and redundant description will be omitted.

### (First Embodiment)

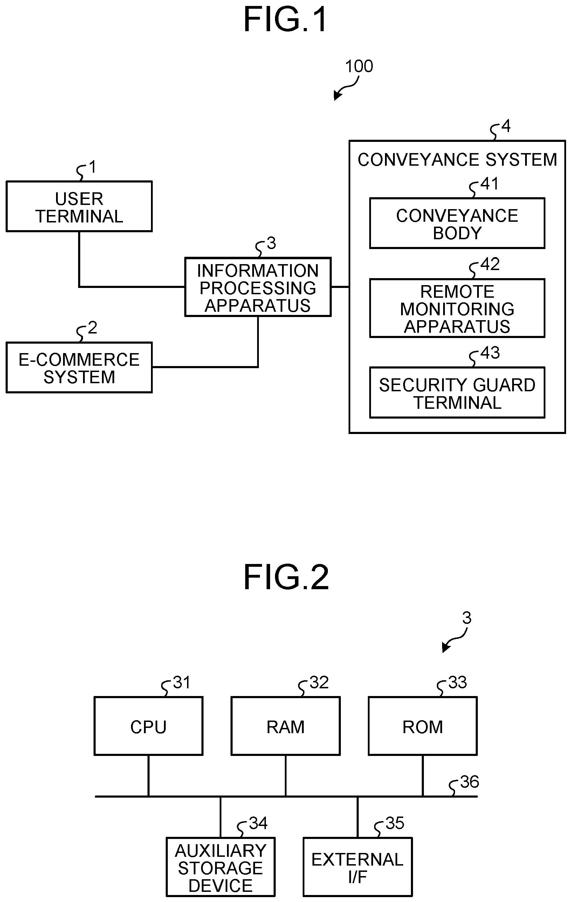

FIG. 1 is a schematic diagram illustrating an example of a conveyance management system 100 according to a first embodiment. The conveyance management system 100 includes a user terminal 1, an e-commerce system 2, an information processing apparatus 3, and a conveyance system 4. The user terminal 1, the e-commerce system 2, the information processing apparatus 3, and the conveyance system 4 communicate with each other in a wireless or wired manner via a communication network. Note that the configuration of the conveyance management system 100 is not limited thereto.

The user terminal 1 is a terminal used by a user who uses the e-commerce system 2 to be described later. Specifically, the user terminal 1 is an information processing terminal of a user who orders an article. The user terminal 1 is, for example, a personal computer (PC) or a smartphone. Moreover, for example, an application for using the e-commerce system 2 is installed in the user terminal 1.

The application can, for example, order or purchase an article sold in the e-commerce system 2. In addition, the application receives a notification of a status corresponding to a delivery status such as delivery started, delivery in progress, delivery completed, or the like. In addition, the application also performs member registration processing using the e-commerce system 2, and transmits the user profile information representing the attribute of the user together with the order history to the information processing apparatus 3 to be described later by consent of the user.

The e-commerce system 2 is a system to sell articles. The e-commerce system 2 is, for example, a virtual shop that a user can purchase an article by using the user terminal 1, and is a shopping mall system constructed in a web site on the Internet. The e-commerce system 20 accepts an order for an article from the user terminal 10. The e-commerce system 2 transmits a delivery request of the article purchased by the user to the information processing apparatus 3 to be described later.

Moreover, the e-commerce system 2 may include a terminal device of a real shop that sells articles. For example, the article includes a medicine, and is connected via a communication network to a pharmacy device that sells the medicine on the Internet. The pharmacy device sells medicine on the basis of standards and procedures for selling medicine on the Internet.

The information processing apparatus 3 manages a conveyance body that sequentially conveys one or more articles to a pickup site of the article. Specifically, the information processing apparatus 3 makes a delivery request to the conveyance system 4 to be described later to deliver the article on the basis of the delivery request transmitted from the e-commerce system 2. Moreover, the information processing apparatus 3 includes, for example, a server, a cloud, or the like, but is not limited thereto. The functions of the information processing apparatus 3 will be described later.

The conveyance system 4 conveys the article to the user on the basis of the delivery request transmitted by the information processing apparatus 3. The conveyance system 4 includes a conveyance body 41, a remote monitoring apparatus 42, and a security guard terminal 43. Note that the configuration of the conveyance system 4 is not limited thereto.

The conveyance body 41 is an autonomous conveyance machine that is provided with a plurality of parcel compartments for storing articles. Additionally, the conveyance body 41 includes a first door for opening and closing the parcel compartment. The first door is locked. The first door is unlocked by using, for example, authentication information associated with a consignee. The conveyance body 41 sequentially delivers the articles loaded in the parcel compartment to one or more designated delivery destinations on the basis of a delivery instruction (also referred to as a conveyance plan) from the remote monitoring apparatus 42 to be described later. In addition, when the article to be delivered is loaded, the conveyance body 41 transmits a loading preparation completion notification to the information processing apparatus 3. Moreover, the conveyance body 41 transmits a progress status notification of the delivery status to the information processing apparatus 3 at predetermined intervals.

Upon arriving at the pickup site of the article, the conveyance body 41 cooperates with the imaging device included in the conveyance body 41 to image operation information representing an operation related to the consignee's receipt of the article at the pickup site. In addition, the conveyance body 41 transmits, to the information processing apparatus 3, the imaged operation information representing the operation related to the consignee's receipt of the article at the pickup site. The operation information may include an open/closed state of the first door that opens and closes the parcel compartment. Moreover, the operation information may include an open/closed state of a second door provided at an entrance of a house as a pickup site. Note that the conveyance body 41 may transmit the progress status notification to the remote monitoring apparatus 42.

The remote monitoring apparatus 42 is an apparatus that monitors the operating states of plural conveyance bodies 41. Specifically, the remote monitoring apparatus 42 is an apparatus for monitoring the travelling of the conveyance bodies 41 by a surveillance staff who monitors the conveyance bodies 41. The remote monitoring apparatus 42 is, for example, an apparatus to which plural display devices (in one example, liquid crystal displays) are connected.

For example, when one surveillance staff monitors three conveyance bodies 41, and there are three surveillance staff, up to nine conveyance bodies 41 can be monitored. Note that different surveillance staff may monitor the same conveyance body 41. In one example, the surveillance staff may be in charge of monitoring up to three conveyance bodies 41 at the same time, and three surveillance staff may be in charge while sharing seven conveyance bodies 41. When one conveyance body 41 is switched from monitoring to remote control by a surveillance staff, a mode in which two surveillance staffs monitor the remaining six conveyance bodies 41 may be adopted.

Note that, when there is the conveyance body 41 that cannot be monitored, the surveillance staff remotely controls the conveyance body 41 to stop. The remote monitoring apparatus 42 can switch the conveyance body 41 to be monitored to the remote control on the basis of a predetermined condition such as an error in the delivery route and occurrence of a trouble or the like. Moreover, the remote monitoring apparatus 42 contacts a security guard in the vicinity of the conveyance body 41 on the basis of a predetermined condition such as, for example, a state where a failure occurs in the conveyance body 41 and it is unable to travel, and causes the security guard to head toward the conveyance body 41.

Note that the remote monitoring apparatus 42 is configured to be manned with one surveillance staff monitoring the conveyance bodies 41, but may be completely unmanned with artificial intelligence (AI) processing, for example. In this case, the remote monitoring apparatus 42 does not need to be configured independently of the conveyance system 4, and may be implemented as part of the function of the information processing apparatus 3.

In addition, the remote monitoring apparatus 42 receives the delivery request from the information processing apparatus 3. Moreover, the remote monitoring apparatus 42 receives the delivery instruction from the information processing apparatus 3. The content related to the delivery request and the delivery instruction will be described later.

FIG. 2 is a diagram illustrating an example of a hardware configuration of the information processing apparatus 3 according to the first embodiment. As illustrated in FIG. 2, in the information processing apparatus 3, a central processing unit (CPU) 31, a random access memory (RAM) 32, a read only memory (ROM) 33, an auxiliary storage device 34, and an external I/F 35 are connected to one another by a bus 36, and the information processing apparatus 3 has a hardware configuration using a normal computer.

The CPU 31 is an arithmetic device that controls the information processing apparatus 3. Note that the CPU 31 is an example of a processor in the information processing apparatus 3 of the first embodiment, and another processor or a processing circuit may be provided instead of the CPU 31. The RAM 32 is, for example, a main storage device of the information processing apparatus 3, and stores data necessary for various processes by the CPU 31.

The ROM 33 is a nonvolatile memory, and stores various data (information written at the manufacturing stage of the information processing apparatus 3) including a program for activating the information processing apparatus 3. The auxiliary storage device 34 stores, for example, various data such as a program executed by the CPU 31. The auxiliary storage device 34 includes, for example, a hard disc drive (HDD), a solid state drive (SSD), or the like. The external I/F 35 is an interface for transmitting and receiving data. Moreover, the external I/F 35 is an interface for connecting (communicating) with external devices such as the user terminal 1, the e-commerce system 2, and the conveyance system 4.

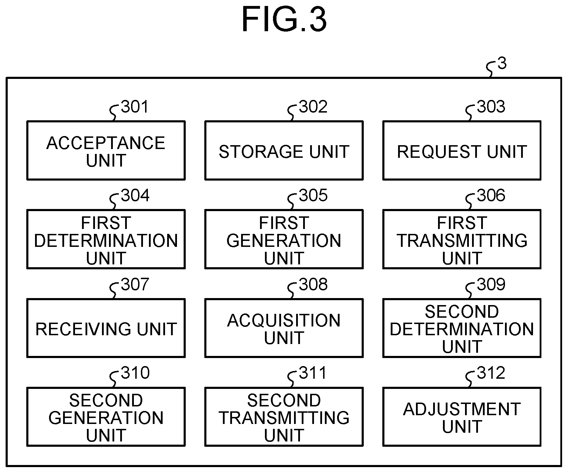

FIG. 3 is a block diagram illustrating an example of functions included in the information processing apparatus 3 according to the first embodiment. As illustrated in FIG. 3, the information processing apparatus 3 according to the first embodiment includes an acceptance unit 301, a storage unit 302, a request unit 303, a first determination unit 304, a first generation unit 305, a first transmitting unit 306, a receiving unit 307, an acquisition unit 308, a second determination unit 309, a second generation unit 310, a second transmitting unit 311, and an adjustment unit 312. The function of the information processing apparatus 3 is not limited thereto.

The acceptance unit 301 accepts a delivery request from the e-commerce system 2. Specifically, the acceptance unit 301 accepts the delivery request of the article purchased by the user transmitted by the e-commerce system 2. The content accepted by the acceptance unit 301 is stored in the storage unit 302.

The storage unit 302 stores the content accepted by the acceptance unit 301. In addition, the storage unit 302 stores the content requested by the request unit 303. Moreover, the storage unit 302 stores the content determined by the first determination unit 304. The storage unit 302 stores the content generated by the first generation unit 305. In addition, the storage unit 302 stores the content transmitted by the first transmitting unit 306. Moreover, the storage unit 302 stores the content received by the receiving unit 307. The storage unit 302 stores the content acquired by the acquisition unit 308.

In addition, the storage unit 302 stores the content determined by the second determination unit 309. Moreover, the storage unit 302 stores the content generated by the second generation unit 310. In addition, the storage unit 302 stores the content transmitted by the second transmitting unit 311. Moreover, the storage unit 302 stores the content adjusted by the adjustment unit 312. The storage unit 302 is realized by, for example, the auxiliary storage device 34 or the like included in the information processing apparatus 3.

The request unit 303 requests the conveyance system 4 on the basis of the delivery request accepted by the acceptance unit 301. Specifically, the request unit 303 requests the remote monitoring apparatus 42 for the content of the delivery request accepted by the acceptance unit 301, namely, the delivery request of the article purchased by the user. The content accepted by the request unit 303 is stored in the storage unit 302. Note that the request unit 303 may request the conveyance body 41 on the basis of the delivery request accepted by the acceptance unit 301.

Upon receiving the loading preparation completion notification transmitted by the conveyance body 41, the first determination unit 304 determines whether or not the article accepted by the acceptance unit 301 has been correctly loaded onto the conveyance body 41 on the basis of the article information attached to the article. When the conveyance body 41 does not correctly load the article, the first determination unit 304 instructs the conveyance body 41 to correctly load the article. The result determined by the first determination unit 304 is stored in the storage unit 302. In addition, the article information referred to in the determination by the first determination unit 304 is stored in the storage unit 302.

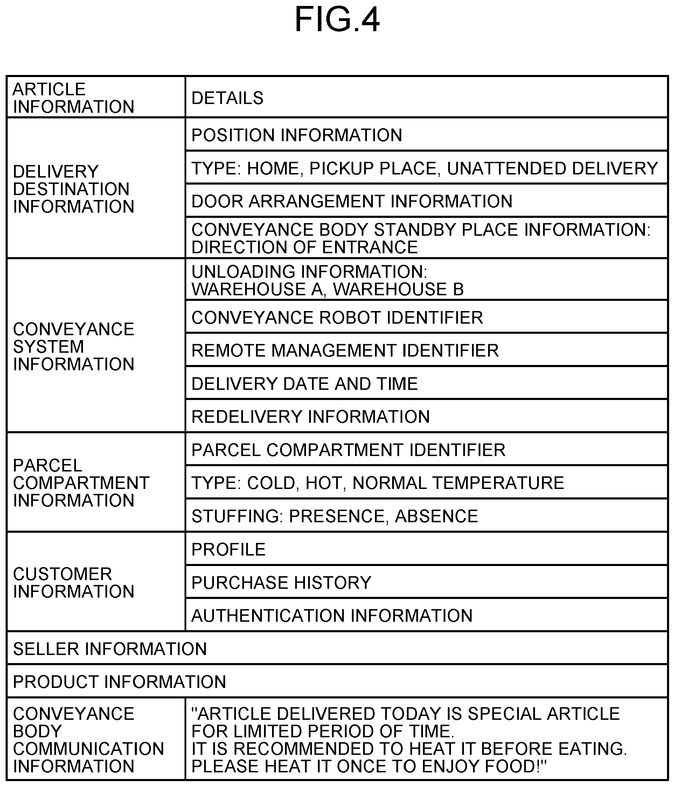

Here, article information attached to an article will be described with reference to FIG. 4. FIG. 4 is a table illustrating an example of article information.

The article information includes delivery destination information, conveyance system information, parcel compartment information, customer information, seller information, product information, and conveyance body communication information. The article information is stored in, for example, a tag attached to the article, and the tag is, for example, a two-dimensional code such as a QR code (registered trademark) or an IC tag such as a radio frequency identification (RFID). Note that the article information is not limited thereto.

The delivery destination information includes position information, a type, and door arrangement information as destination information to which the article is to be delivered. The position information is information on a destination to which the conveyance body 41 conveys an article, and is, for example, address, latitude and longitude information, or the like. The type is whether the delivery destination is a home of the user who has purchased the article, a pickup place which is not the home, for example, but a place designated by the user as the delivery destination, such as a work place where the user works, an unattended delivery that allows the user can designate a predetermined place and receive the article without face-to-face contact, or the like.

The door arrangement information is information regarding the arrangement of the door of the delivery destination, and is, for example, the arrangement of the door of the house corresponding to the delivery destination information. Conveyance body standby place information is a standby place where the conveyance body 41 conveys the article which indicates a place where the user receives the article, and is, for example, a direction of a door (in one example, an entrance) or the like. Note that the delivery destination information is not limited thereto.

The conveyance system information includes unloading information, a conveyance body identifier, a remote management identifier, a delivery date and time, and redelivery information as information regarding the conveyance system 4. The unloading information is a warehouse or the like where the article is delivered. The conveyance body identifier is for identifying the conveyance body 41, and is, for example, an identification (ID) or the like for managing the conveyance body 41.

The remote management identifier identifies the remote monitoring apparatus 42, and is, for example, an ID, a name, or the like for managing the remote monitoring apparatus 42. The delivery date and time is a date and time when the article is conveyed to the delivery destination, and is, for example, a delivery date, a delivery time zone, or the like. The redelivery information is information representing that the article is subject to redelivery, and is, for example, a date and time when its redelivery date is designated. Note that the conveyance system information is not limited thereto.

The parcel compartment information is information related to the parcel compartment of the conveyance body 41, and includes a parcel compartment identifier, a type, and stuffing. The parcel compartment identifier identifies a parcel compartment included in the conveyance body 41, and is, for example, an ID or the like for managing the parcel compartment of the conveyance body 41. The type represents a state inside the parcel compartment, and indicates a temperature state of the parcel compartment, for example, "cold" indicating a state of storing frozen products or the like, "hot" indicating a state of storing cooked articles or the like, "normal temperature" indicating a state of managing articles at normal temperature, or the like. The stuffing indicates whether or not there is a package cushioning material that stabilizes the article in the parcel compartment. Note that the parcel compartment information is not limited thereto.

The customer information is information related to a user who has purchased the article, and includes a profile, a purchase history (also referred to as a conveyance history), and authentication information. The profile represents a user attribute, and is, for example, a gender, an age, or the like of the user. The purchase history indicates a history of using a service of delivering an article using the conveyance body 41, and is, for example, a date and time when the user uses the service of the delivery by the conveyance body 41. The authentication information is information for unlocking the door of the parcel compartment of the conveyance body 41, and is, for example, a password. Note that the customer information is not limited thereto.

Seller information is information regarding a vendor from which the user has purchased the article, and is, for example, a name, an address, or the like of the vendor. Note that the seller information is not limited thereto. The product information is information on an article purchased by the user, and is, for example, an article name of the article, a weight of the article, or the like. Note that the article information is not limited thereto.

The conveyance body communication information provides the user with information to be added to an article by the conveyance body 41. For example, at the timing when the user takes out the article from the parcel compartment of the conveyance body 41, the conveyance body 41 cooperates with an output device (for example, a speaker) included in the conveyance body 41 to output a message such as "The article delivered today is a special article for a limited period of time. It is recommended to warm up it before eating." Note that the conveyance body communication information is not limited thereto.

Now return to FIG. 3. The first generation unit 305 is an example of a generation unit. The first generation unit 305 generates a conveyance plan of the conveyance body 41. Specifically, when the first determination unit 304 determines that the article accepted by the acceptance unit 301 is correctly loaded on the conveyance body 41, the first generation unit 305 generates the conveyance plan of the conveyance body 41 on the basis of the article information attached to the article loaded on the conveyance body 41. The conveyance plan is generated on the basis of the position information of the delivery destination information included in the article information and the delivery date and time. The content generated by the first generation unit 305 is stored in the storage unit 302. Note that the conveyance plan generated by the first generation unit 305 is not limited thereto.

The first transmitting unit 306 is an example of a transmission unit. The first transmitting unit 306 transmits a delivery started notification to the user terminal 1. Specifically, the first transmitting unit 306 transmits the delivery started notification to the user terminal 1 when delivery of the article loaded in the parcel compartment by the conveyance body 41 to one or more designated delivery destinations is started. The delivery started notification includes a date and time when the conveyance body 41 departs from the warehouse, a date and time when the conveyance body 41 arrives at the pickup site of the user, article information, and the like.

In addition, the first transmitting unit 306 transmits a progress status notification to the user terminal 1. Specifically, the first transmitting unit 306 transmits, to the user terminal 1, a progress status that is received by the receiving unit 307 described later and corresponds to a state of being conveyed by the conveyance body 41.

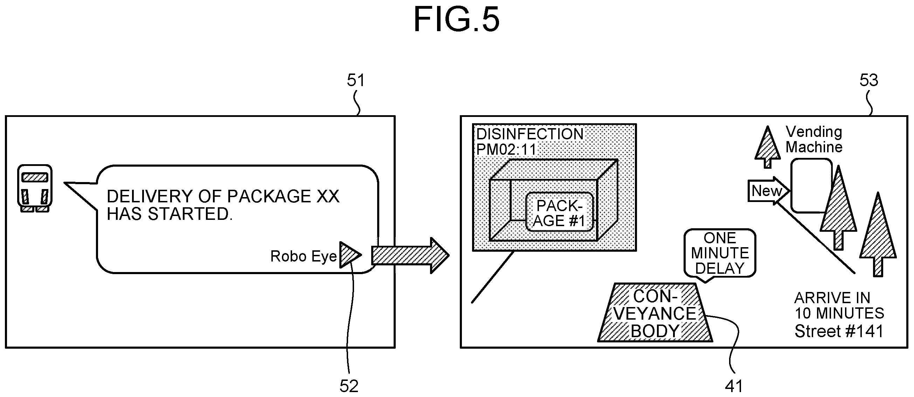

Here, the progress status notification will be described with reference to FIG. 5.

FIG. 5 is a schematic diagram illustrating an example of content to be notified to the user terminal 1. A progress notification 51 indicates the current delivery state of the conveyance body 41. Here, as the progress notification 51, a message "Delivery of Package XX has started." is notified to the user terminal 1. The message is, for example, an SMS (short message service), an e-mail, or the like.

In addition, imaging information captured by the conveyance body 41 may be reproduced as the message. For example, when the user presses a reproduction function 52 attached to the message, a progress notification 53 is displayed. The progress notification 53 is a current position of the conveyance body 41, an assumed time until delivery completion, a delay time in a case where a delay is expected from the expected delivery time, a state of a parcel compartment in which the article is to be stored, a disinfection state where the parcel compartment is disinfected, and the like.

Note that the progress notification 53 may transmit imaging information imaged by the conveyance body 41 to the user terminal 1. In addition, the progress notification 53 may display the latest status of the parcel compartment or additional information such as a newly installed vending machine at the place where the conveyance body 41 travels in an overlapping manner.

The content of the progress notification 53 allows the user to confirm the notification of the delivery progress on the user terminal 1 not only for the position but also the delay time, the load collapsed state, the disinfection state, and the like, and to enjoy the time during which the conveyance body 41 is performing transportation. In particular, the information regarding the delay time is effective because, for example, the user at the delivery destination is informed of a situation where the conveyance body 41 is performing transportation while overcoming various road conditions, and the information is also a matter of interest for the user, particularly children, who wait for the arrival of the article.

Moreover, the first transmitting unit 306 transmits an arrival notification to the user terminal 1. Specifically, the first transmitting unit 306 transmits the arrival notification that is received by the receiving unit 307 described later and indicates that the conveyance body 41 has arrived at the pickup site of the article.

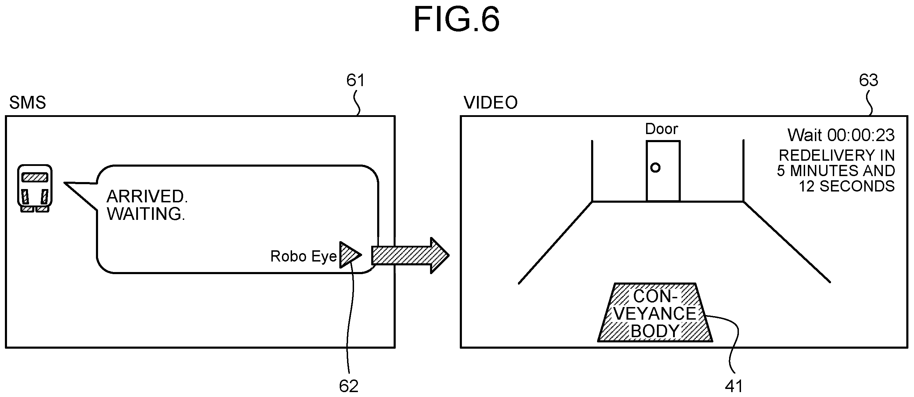

Here, the arrival notification will be described with reference to FIG. 6. FIG. 6 is a schematic diagram illustrating an example of content to be notified to the user terminal 1. Here, an arrival notification 61 notifies the user terminal 1 of a message such as "Arrived. Waiting."

In addition, imaging information captured by the conveyance body 41 may be reproduced as the message. For example, when the user presses a reproduction function 62 attached to the message, an arrival notification 63 is displayed. The arrival notification 63 is a current position of the conveyance body 41, a pickup site imaged by the conveyance body 41, a time until the redelivery process is performed (in one example, a countdown), and the like.

Note that the arrival notification 63 may transmit imaging information imaged by the conveyance body 41 to the user terminal 1. The content of the arrival notification 63 allows the user to confirm the time until the arrival notification or the redelivery process is performed. In particular, displaying the time until the redelivery process is performed leads to motivation to pick up the article in time, accelerates the user's behavior, and can reduce the risk of delivery delay. Note that a benefit (in one example, a coupon, a point, or the like) that requires completion of receipt of the article within a predetermined time may be displayed.

In addition, the first transmitting unit 306 transmits a proposal for changing the pickup site to the user terminal 1. The proposal for changing the pickup site will be described later. Moreover, the first transmitting unit 306 transmits a delivery completed notification to the user terminal 1. Specifically, when the user completes a receipt of the article, the first transmitting unit 306 transmits the delivery completed notification that is a receipt result. The content transmitted by the first transmitting unit 306 is stored in the storage unit 302. Note that the delivery started notification, the progress notification, the arrival notification, and the delivery completed notification transmitted by the first transmitting unit 306 are not limited thereto.

The receiving unit 307 receives the progress status notification from the conveyance body 41. Specifically, the receiving unit 307 receives the progress status corresponding to the state of conveyance by the conveyance body 41. The receiving unit 307 receives the arrival notification from the conveyance body 41. Specifically, the receiving unit 307 receives the arrival notification indicating that the conveyance body 41 has arrived at the pickup site of the article. Moreover, the receiving unit 307 receives the content for changing the pickup site from the user terminal 1. The content of changing the pickup site will be described later. The content received by the receiving unit 307 is stored in the storage unit 302. Note that the progress status notification and the arrival notification received by the receiving unit 307 are not limited thereto.

The acquisition unit 308 acquires, via the conveyance body 41, the operation information representing the operation related to the consignee's receipt of the article at the pickup site. Specifically, after the conveyance body 41 arrives at the pickup site, the acquisition unit 308 acquires the operation information representing the operation related to the consignee's receipt of the article at the pickup site included in the image captured by the conveyance body 41. In addition, the acquisition unit 308 acquires the open/closed state of the first door as the operation information via the conveyance body 41.

Moreover, the acquisition unit 308 acquires the open/closed state of the second door provided at the entrance of the house as the pickup site as the operation information via the conveyance body 41. The operation information representing the operation related to the consignee's receipt at the pickup site includes, for example, an open/closed state of the first door of the parcel compartment included in the conveyance body 41, an open/closed state of the second door provided at the entrance of the house as the pickup site, recognition information (in one example, an adult, a child, or the like) and behavior information of the consignee.

In addition, the acquisition unit 308 acquires a conveyance history that is a past operation related to a consignee's receipt, from history information storing the conveyance history of articles using the conveyance body 41 for each user. Specifically, the acquisition unit 308 acquires the conveyance history that is the past operation related to the consignee's receipt, from the conveyance history of the customer information included in the article information stored in the storage unit 302. The past operation is, for example, an operation of receiving an article via the conveyance body 41. The content acquired by the acquisition unit 308 is stored in the storage unit 302. Note that the operation information representing the operation related to the consignee's receipt at the pickup site is not limited thereto.

The second determination unit 309 is an example of a determination unit. The second determination unit 309 determines the type of the consignee on the basis of the operation information acquired by the acquisition unit 308. Specifically, the second determination unit 309 determines a type of the consignee in a case where the operation of receiving the article is not performed within a predetermined time after the conveyance body 41 arrives at the pickup site. For example, in a case where the first door of the conveyance body 41 is not in an open state within a predetermined time after the conveyance body 41 arrives at the pickup site, the second determination unit 309 determines that the consignee is of the first type.

In addition, for example, in a case where the second door provided at an entrance of a house as a pickup site is not in an open state within a predetermined time after the conveyance body 41 arrives at the pickup site, the second determination unit 309 determines that the consignee is of the second type. Moreover, for example, in a case where the acquisition unit 308 cannot acquire the conveyance history of the consignee, the second determination unit 309 determines that the consignee is of the third type. Note that the second determination unit 309 does not need to determine the type of the consignee if the receipt of the article is completed within a predetermined time after the conveyance body 41 arrives at the pickup site.

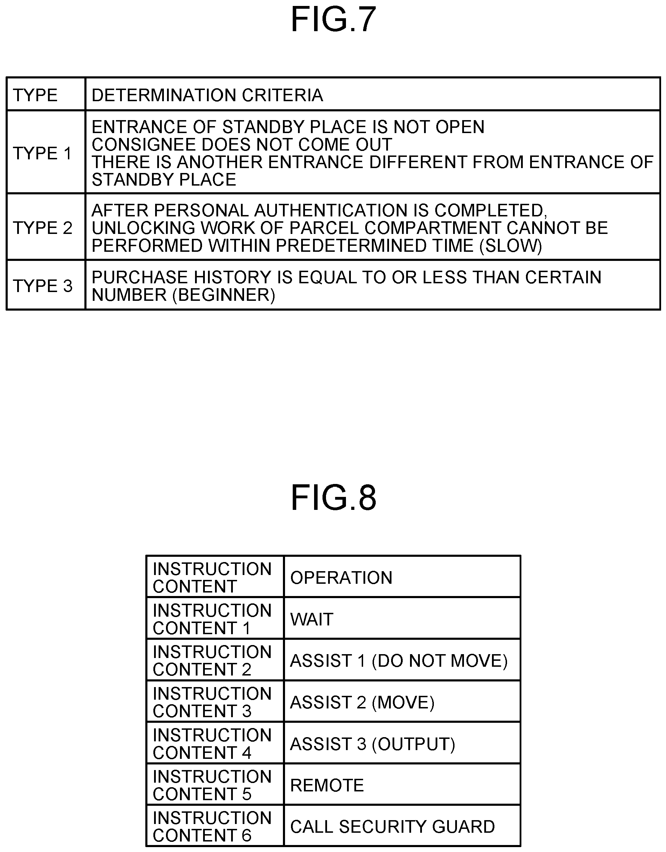

Here, the types of consignees will be described with reference to FIG. 7. FIG. 7 is a table illustrating an example of types of consignees. The type of consignee is a type of a user who takes time to receive the conveyed article. A table indicating the types of the consignees is stored in the storage unit 302.

Referring to FIG. 7 regarding the types of consignees, in a case where the type of the consignee is type 1, the second door provided at the entrance of the house to be the pickup site is not opened, and the consignee does not come out. For example, in a case where the door of the entrance of the house is not opened and the consignee does not exit even after 5 minutes elapse after the conveyance body 41 arrives at the pickup site, the second determination unit 309 determines that the type of the consignee is type 1.

The type 1 also includes a state where there is an entrance that is different from the entrance of the house. As to whether or not there is the different entrance, the door arrangement information of the delivery destination information included in the article information stored in the storage unit 202 is referred. The second determination unit 309 refers to the door arrangement information of the delivery destination information included in the article information, and determines the type of the consignee as type 1 if there is an entrance different from the current location where the conveyance body 41 is located. In the case of a residential area where standardized houses are arranged, whether or not another door is present may be estimated by, for example, an AI method from door arrangement information of another similar house.

Next, if the type of the consignee is type 2, that is a state where unlocking work of the parcel compartment included in the conveyance body 41 cannot be performed. For example, in a case where the personal authentication of the parcel compartment is completed and the consignee is present, but the unlocking work of the parcel compartment cannot be performed even after 5 minutes have elapsed, the second determination unit 309 determines that the type of the consignee is type 2.

Next, in a case where the type of the consignee is type 3, the number of times of use of the service for delivering the article using the conveyance body 41 is equal to or less than a given number. The second determination unit 309 makes reference to the conveyance history of the customer information included in the article information, and determines that the type of the consignee is type 3 in a case where the number of times of use is equal to or less than the given number. Note that, although the consignee is not necessarily the user who ordered the article, there is a high possibility that the consignee is a family member of the customer, and it is estimated whether or not the consignee is a beginner on a family basis on the purchase history of the customer. The second determination unit 309 may redundantly determine the type of the consignee.

The type of the consignee is not limited thereto. The types of the consignee include, for example, the consignee does not notice the arrival of the conveyance body 41, the consignee takes time to unload the article, the consignee does not understand that the receipt will be completed when the consignee closes the first door of the parcel compartment of the conveyance body 41, and stands still without doing anything, and the consignee is trying to open a wrong door of another parcel compartment.

Now return to FIG. 3. The second generation unit 310 is an example of a generation unit. The second generation unit 310 generates an operation instruction (also referred to as a next possible correspondence or correspondence candidate) indicating an instruction of an operation corresponding to the type of the consignee with respect to the conveyance body 41 on the basis of a result of the second determination unit 309 determining the type of the consignee.

Here, the content of the operation instruction will be described with reference to FIG. 8. FIG. 8 is a table illustrating an example of an operation instruction of the conveyance body 41.

First, in a case where the type of the consignee determined by the second determination unit 309 is type 1, it corresponds to instruction content 1 or instruction content 2. The operation of the instruction content 1 is an operation of waiting until the redelivery process elapses. The operation of the instruction content 2 is an assist 1, the conveyance body 41 does not move, and the change of the pickup site is suggested to the user terminal 1. The reason for proposing the change of the pickup site is that the consignee is likely to wait at another door. If the type of the consignee determined by the second determination unit 309 is type 1, the second generation unit 310 generates at least one of the instruction content 1 or the instruction content 2 as the instruction content for the conveyance body 41 to operate.

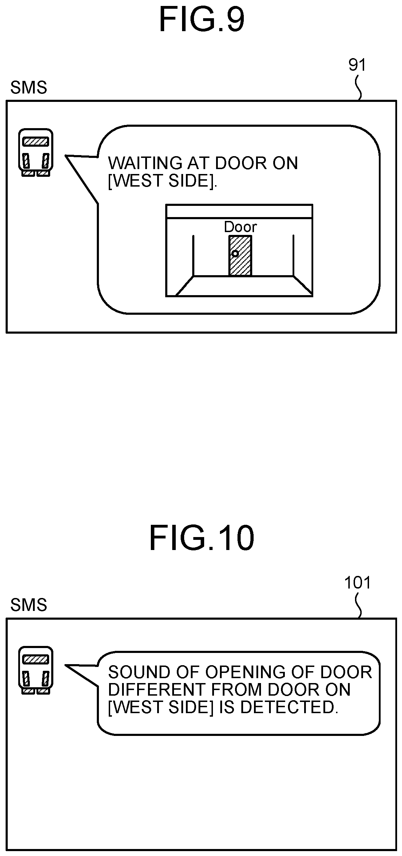

Here, with reference to FIGS. 9, 10, 11, and 12, the content related to the proposal for changing the pickup site for the user terminal 1 will be described. If the type of the consignee determined by the second determination unit 309 is type 1, the second generation unit 310 generates the content representing that the conveyance body 41 is on standby in front of the door. Thereafter, the content generated by the second generation unit 310 is transmitted by the first transmitting unit 306. In the case of FIG. 9, generated content 91 generated by the second generation unit 310 has the content of "Waiting at Door on "West Side"", and includes at least information about the position of the door corresponding to the place where the conveyance body 41 is on standby.

In addition, after the first transmitting unit 306 transmits the generated content 91, a door different from the door generated in the generated content 91 by the consignee may be opened. The conveyance body 41 may be capable of detecting opening of a door at a distant position with reference to sound of opening of another door or a camera image (imaging information). In this case, the second generation unit 310 generates the content detected by the conveyance body 41. Thereafter, the content generated by the second generation unit 310 is transmitted by the first transmitting unit 306.

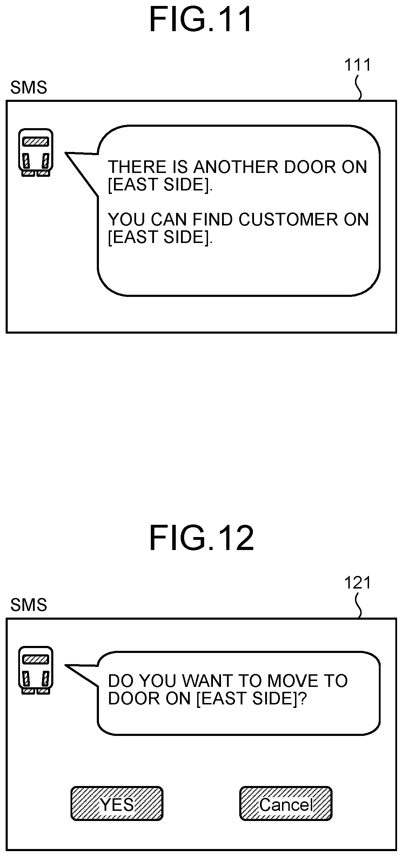

In the case of FIG. 10, generated content 101 generated by the second generation unit 310 has the content of "Sound of Opening of Door Different from Door on "West Side" is detected.", and includes at least information about the position of the door corresponding to the place where the conveyance body 41 is on standby. In the case of FIG. 11, a generated content 111 generated by the second generation unit 310 is the content of "There is Another Door on "East Side". You can Find Customer on "East Side".", and at least information on the second door imaged by the conveyance body 41 and the consignee is included. In this case, the direction of the door is generated from door arrangement information or the like included in the delivery destination information stored in the storage unit 202.

In the case of FIG. 12, generated content 121 generated by the second generation unit 310 has the content of "Do You Want to Move to Door on "East Side"?", "Yes", and "No", and includes at least information on whether or not to move to the detected door. As a result, the user can determine whether or not to move the conveyance body 41 on the basis of the received content.

Now return to FIG. 8. When the user selects "Yes" for the generated content 121 generated by the second generation unit 310, for example, the receiving unit 307 receives the generated content, and then the second generation unit 310 corresponds to instruction content 3 on the basis of the content received by the receiving unit 307. The operation of the instruction content 3 is an assist 2, and is an operation that the conveyance body 41 moves (travels) to the changed pickup site.

Next, in a case where the type of the consignee determined by the second determination unit 309 is type 2, it corresponds to instruction content 4 or instruction content 5. The operation of the instruction content 4 is an assist 3, and performs guidance display and audio output for a way to pick up and the like in cooperation with a display device and an output device included in the conveyance body 41. The operation of the instruction content 5 is performed remotely from the remote monitoring apparatus 42, and in cooperation with a display device or an output device provided in the conveyance body 41, guidance display or audio output of a way to pick up and the like corresponding to slow behavior is performed. For example, for a type of consignee who is slow to unlock the parcel compartment, an audio guidance "Input the authentication number with a numeric keypad, open the door of the parcel compartment, and take out the package." is output from the remote monitoring apparatus 42.

Next, in a case where the article cannot be successfully received even by the remote handling of the instruction content 5, it corresponds to instruction content 6. The operation of the instruction content 6 is a security guard call, and performs calling the security guard in cooperation with the external I/F included in the conveyance body 41. If the type of the consignee determined by the second determination unit 309 is "slow", the second generation unit 310 generates at least one of the instruction content 4, the instruction content 5 or the instruction content 6 as the instruction content for the conveyance body 41 to operate.

Next, in a case where the type of the consignee determined by the second determination unit 309 is type 3, it corresponds to the instruction content 4. If the type of the consignee determined by the second determination unit 309 is type 3, the second generation unit 310 generates the instruction content 4 as the instruction content for the conveyance body 41 to operate.

Note that the instruction content corresponding to the conveyance body 41 has been described for each type of consignee, but the present invention is not limited thereto. In addition, the second generation unit 310 may generate an operation instruction for operating the conveyance body 41 by combining instruction contents for each type of consignee.

The second transmitting unit 311 transmits, to the conveyance body 41, the operation instruction generated by the second generation unit 310 to operate the conveyance body 41. The content transmitted by the second transmitting unit 311 is stored in the storage unit 302.

The adjustment unit 312 adjusts the conveyance plan of the article to be conveyed to the next pickup site in accordance with the determination result of the second determination unit 309. Specifically, if the second determination unit 309 determines that the consignee is of the first type, the adjustment unit 312 delays the time to arrive at the next pickup site by the time corresponding to the first type as the conveyance plan of the article to be conveyed to the next pickup site. In addition, if the second determination unit 309 determines that the consignee is of the second type, the adjustment unit 312 delays the time to arrive at the next pickup site by the time corresponding to the second type as the conveyance plan of the article to be conveyed to the next pickup site. Moreover, if the second determination unit 309 determines that the consignee is of the third type, the adjustment unit 312 delays the time to arrive at the next pickup site by the time corresponding to the third type as the conveyance plan of the article to be conveyed to the next pickup site.

Note that the time corresponding to each type is stored in the storage unit 302, and may be set in advance to five minutes in the case of type 1, seven minutes in the case of type 2, and ten minutes in the case of type 3. Moreover, as the time to be delayed by the adjustment unit 312, a difference between the original conveyance plan and the time actually needed for pickup may be calculated, and the time may be delayed on the basis of the calculated time.

For the time corresponding to each type, the past content, which has been stored in the storage unit 302 and been adjusted by the adjustment unit 312, may be input and learned by using an AI method such as machine learning to create a learning model, and the type determination of the consignee and the prediction of the delay time may be performed from the operation information regarding the consignee acquired by the conveyance body 41 on the basis of the learning model. In addition, measures for suppressing the delay time may also be learned on the basis of the contents adjusted by the adjustment unit 312 stored in the storage unit 302. Note that the function of the adjustment unit 312 may be included in the first generation unit 305.

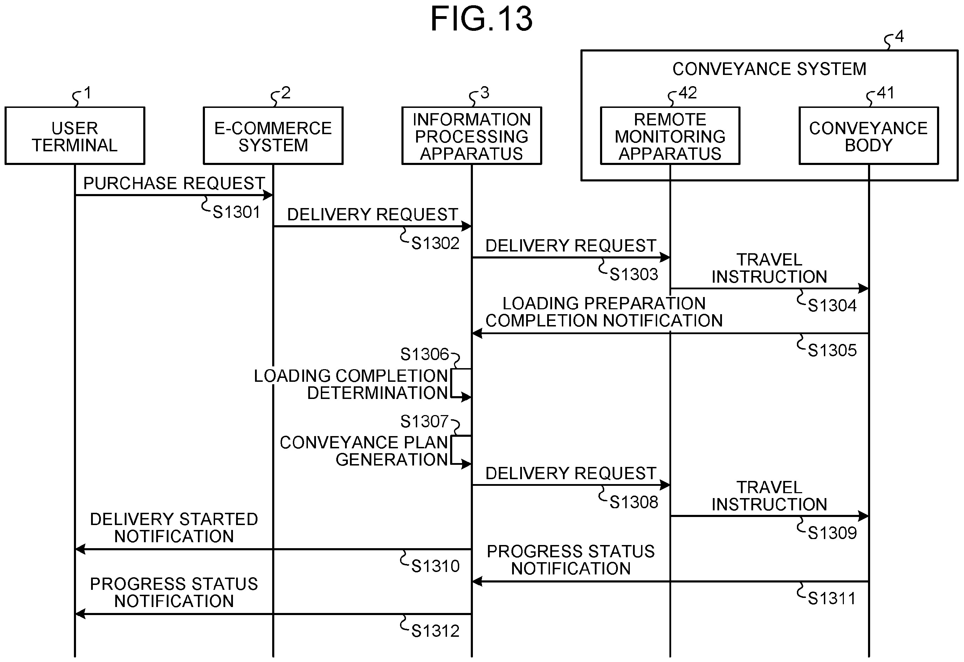

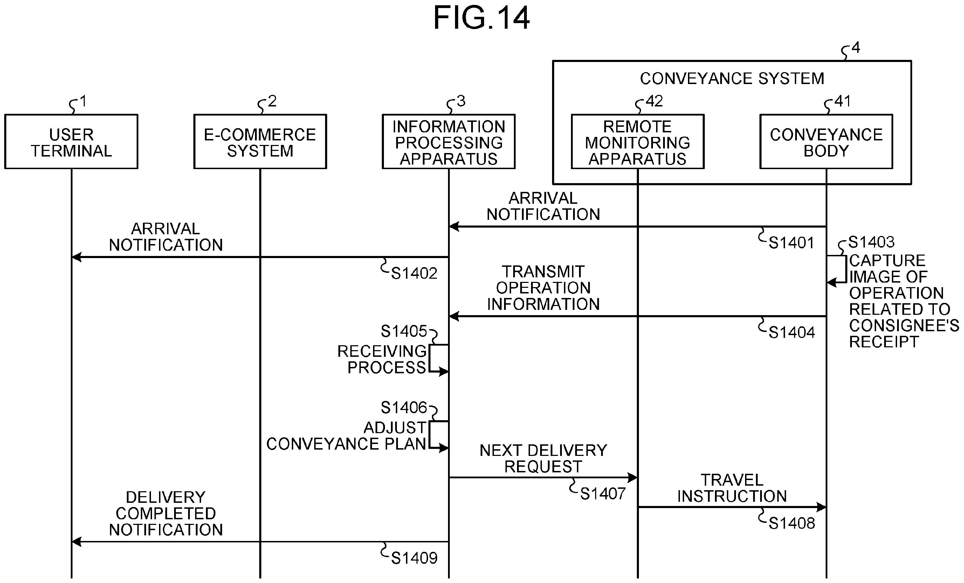

Next, a procedure of a process executed in the conveyance management system 100 will be described with reference to FIGS. 13 and 14. FIG. 13 is a sequence diagram illustrating an example of a procedure of processing executed until the user purchases an article and delivery of the purchased article is started.

First, the user cooperates with the user terminal 1 to make a purchase request for an article to the e-commerce system 2 (step S1301). Subsequently, the e-commerce system 2 requests the information processing apparatus 3 to deliver the article of the purchase requested from the user terminal 1 (step S1302). Subsequently, the request unit 303 makes a delivery request to the remote monitoring apparatus 42 to deliver the article requested for delivery from the e-commerce system 2 (step S1303).

Subsequently, the remote monitoring apparatus 42 gives a travel instruction to the conveyance body 41 (step S1304). When the conveyance body 41 receives the travel instruction, the article requested for delivery from the information processing apparatus 3 in the warehouse is loaded into the parcel compartment, for example. Thereafter, when the loading of the article is completed, the conveyance body 41 performs the loading preparation completion notification to the information processing apparatus 3 (step S1305).

Subsequently, upon receiving the loading preparation completion notification transmitted by the conveyance body 41, the first determination unit 304 determines whether or not the article accepted (also referred to as an article) has been correctly loaded onto the conveyance body 41 on the basis of the article information attached to the article (step S1306). Subsequently, the first generation unit 305 generates a conveyance plan of the conveyance body 41 (step S1307). Subsequently, the first transmitting unit 306 makes a delivery request to the remote monitoring apparatus 42 on the basis of the generated conveyance plan (step S 1308).

Subsequently, the remote monitoring apparatus 42 performs a travel instruction with respect to the conveyance body 41 on the basis of the conveyance plan generated by the information processing apparatus 3 (step S1309). Subsequently, the information processing apparatus 3 transmits a delivery started notification to the user terminal 1 on the basis of the generated conveyance plan (step S 1310).

Subsequently, the conveyance body 41 notifies the information processing apparatus 3 of a progress status notification indicating a current conveyance state (step S1311). Subsequently, the first transmitting unit 306 transmits the progress status notification received from the conveyance body 41 to the user terminal 1 (step S1312).

Next, FIG. 14 is a sequence diagram illustrating an example of a procedure of processing executed until the conveyance body 41 arrives at the pickup site designated by the user and the article purchased by the user is transferred.

The conveyance body 41 transmits an arrival notification indicating that it has arrived at the pickup site to the information processing apparatus 3 (step S1401). Subsequently, the first transmitting unit 306 transmits, to the user terminal 1, an arrival notification indicating that the conveyance body 41 has arrived at the pickup site (step S1402).

Subsequently, the conveyance body 41 causes the information processing apparatus 3 to, in cooperation with the imaging device included in the conveyance body 41, capture an image of an operation related to consignee's receipt (step S1403). Thereafter, the conveyance body 41 transmits imaged operation information to the information processing apparatus 3 (step S1404).

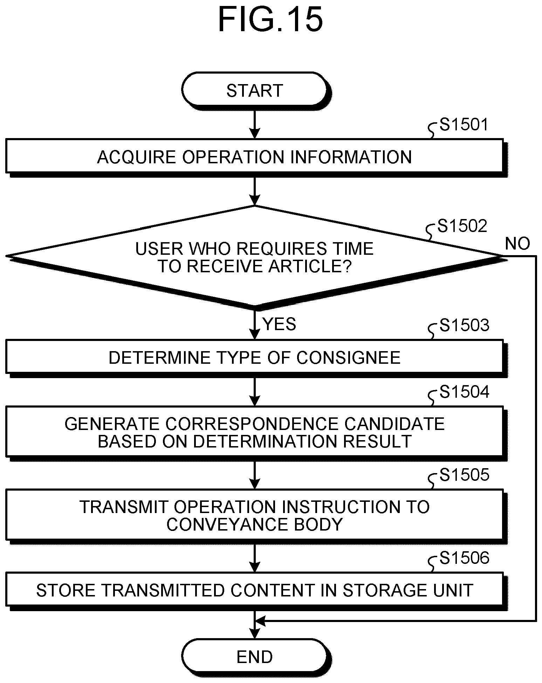

Subsequently, the information processing apparatus 3 performs a receiving process on the basis of the operation information transmitted by the conveyance body 41 (step S1405). Here, the processing performed in step S1405 will be described with reference to FIG. 15. FIG. 15 is a flowchart illustrating an example of the receiving process executed in the information processing apparatus 3.

First, the acquisition unit 308 acquires the reception information transmitted by the conveyance body 41 (step S1501). Subsequently, the second determination unit 309 determines whether or not the user is a user who takes time to receive the article on the basis of the reception information acquired by the acquisition unit 308 (step S1502). Here, in a case where the second determination unit 309 determines that the user is not a user who takes time to receive the article (step S1502: No), the receiving process of step S1405 ends. On the other hand, in a case where the second determination unit 309 determines that the user is a user who takes time to receive the article (step S1502: Yes), the process proceeds to step S1503.

Subsequently, the second determination unit 309 determines the type of the consignee with reference to the table indicating the type of the consignee stored in the storage unit 302 (step S1503). Subsequently, the second generation unit 310 generates an operation instruction (correspondence candidate) for operating the conveyance body 41 on the basis of the type of the consignee determined by the second determination unit 309 (step S1504).

The second transmitting unit 311 transmits, to the conveyance body 41, the operation instruction generated by the second generation unit 310 to operate the conveyance body 41 (step S1505). The storage unit 302 stores the content transmitted by the second transmitting unit 311 (step S1506). When the storage process is performed, this process ends.

Now return to FIG. 14. When the conveyance body 41 completes receipt of the article to the user, the adjustment unit 312 adjusts the conveyance plan of the conveyance body 41 (step S1406). Subsequently, the second transmitting unit 311 makes the next delivery request to the remote monitoring apparatus 42 (step S1407).

Subsequently, the remote monitoring apparatus 42 performs a travel instruction with respect to the conveyance body 41 on the basis of the conveyance plan received from the information processing apparatus 3 (step S1408). Subsequently, the first transmitting unit 306 performs, to the user terminal 1, delivery completed notification indicating that the receipt of the article of the user is completed (step S1409).

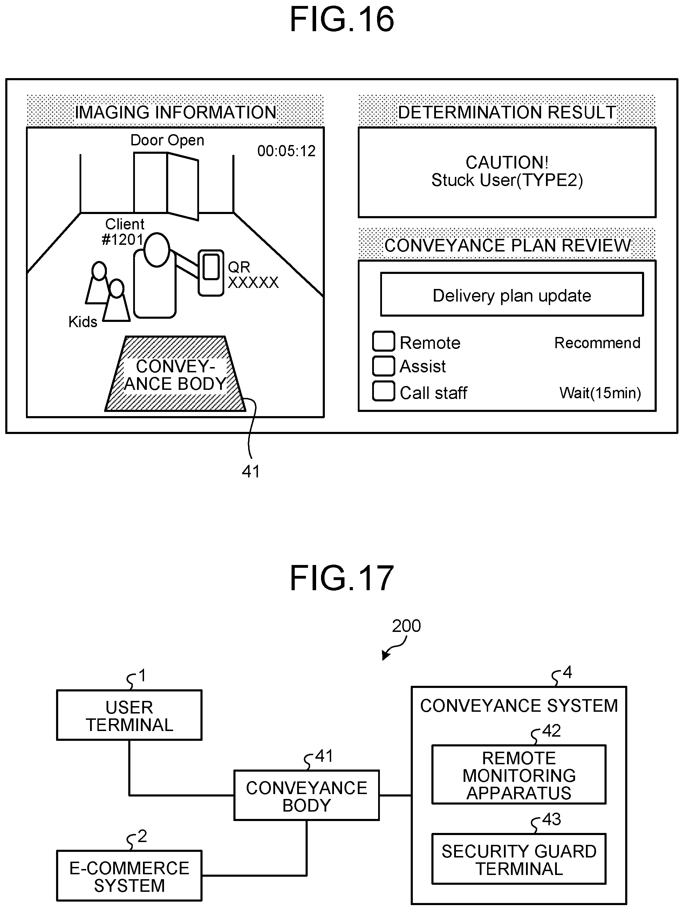

FIG. 16 is a schematic diagram illustrating an example of contents displayed on a display device of the remote monitoring apparatus 42. The contents displayed on the remote monitoring apparatus 42 include operation information representing the operation related to the consignee's receipt of the article imaged by the conveyance body 41, information related to the type of the consignee determined by the information processing apparatus 3, conveyance plan review information generated by the information processing apparatus 3, and the like. Note that contents displayed on the remote monitoring apparatus 42 are not limited thereto.

The operation information captured by the conveyance body 41 includes, for example, an open/closed state of the second door provided at the entrance of the house as the pickup site, recognition information (in one example, an adult, a child, or the like) and behavior information of the consignee, information representing an elapsed time from the arrival of the conveyance body 41 at the pickup site, and the like.

The contents displayed on the remote monitoring apparatus 42 assist the operation of the surveillance staff. For example, in a case where the type of the consignee is type 3 and the first door of the parcel compartment cannot be opened, the surveillance staff notifies the security guard terminal 43 of the nearest security guard going around the conveyance body 41 of the content to be corresponded. In addition, the surveillance staff transmits information representing that the security guard is heading for the conveyance body 41 to the conveyance body 41. The conveyance body 41 that has received the content transmitted from the remote monitoring apparatus 42 displays, for example, a message such as "Security Guard is Coming. Please Wait."

As a result, the surveillance staff can monitor the conveyance body 41 on the basis of the content displayed on the remote monitoring apparatus 42, and can also confirm the behavior of the consignee when the conveyance body 41 arrives at the pickup site, so that it is possible to help the user to appropriately receive the article the user purchased.

As described above, the information processing apparatus 3 according to the first embodiment is an information processing apparatus 3 that manages the conveyance body 41 that sequentially conveys one or more articles to the pickup site of the article, and acquires, via the conveyance body 41, operation information representing an operation related to the consignee's receipt of the article at the pickup site. Then, the type of the consignee is determined on the basis of the operation information acquired. Moreover, the conveyance plan of the article to be conveyed to the next pickup site is adjusted in accordance with the determination result.

According to the configuration of the first embodiment described above, the type of the consignee is determined on the basis of the operation related to consignee's receipt of the article so that it is possible to grasp a delay factor occurring during conveyance. Moreover, the conveyance delay can be suppressed by adjusting the conveyance plan for conveyance to the next pickup site on the basis of the delay factor.

### (Second Embodiment)

A second embodiment will be described with reference to the drawings.

Next, the second embodiment will be described. Description of parts common to those of the above-described first embodiment will be omitted as appropriate. Note that constituent elements similar to those in the first embodiment are denoted by the same reference numerals, and description thereof will be omitted as appropriate.

In the above-described first embodiment, the mode that the information processing apparatus 3 makes a delivery request to the conveyance system 4 to deliver the article on the basis of the delivery request transmitted from the e-commerce system 2 has been described. In the second embodiment, a mode that the conveyance body 41 delivers an article on the basis of a delivery request transmitted from the remote monitoring apparatus 42 will be described.

FIG. 17 is a system configuration diagram illustrating an example of a conveyance management system according to the second embodiment. The conveyance management system 200 includes a user terminal 1, an e-commerce system 2, a conveyance system 4, and a conveyance body 41. The user terminal 1, the e-commerce system 2, the conveyance system 4, and the conveyance body 41 communicate with each other in a wireless or wired manner through a communication network. Note that the configuration of the conveyance management system 200 is not limited thereto.

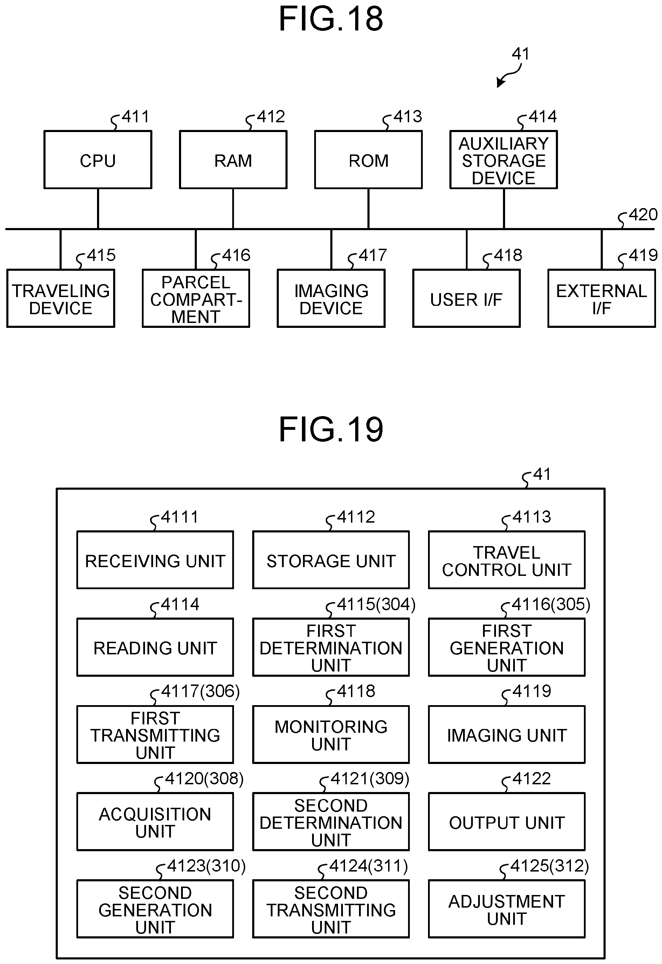

FIG. 18 is a diagram illustrating an example of a hardware configuration of the conveyance body 41 according to the second embodiment. As illustrated in FIG. 18, in the conveyance body 41, a CPU 411, a RAM 412, a ROM 413, an auxiliary storage device 414, a traveling device 415, a parcel compartment 416, an imaging device 417, a user I/F 418, and an external I/F 419 are connected to one another by a bus 420, and the conveyance body 41 has a hardware configuration using a normal computer.

The CPU 411 is an arithmetic device that controls the conveyance body 41. Note that the CPU 411 is an example of a processor in the conveyance body 41 of the second embodiment, and another processor or a processing circuit may be provided instead of the CPU 411. The RAM 412 is, for example, a main storage device of the conveyance body 41, and stores data necessary for various processes by the CPU 411.

The ROM 413 is a nonvolatile memory, and stores various data (information written at the manufacturing stage of the conveyance body 41) including a program for activating the conveyance body 41. The auxiliary storage device 414 stores, for example, various data such as a program executed by the CPU 411. The auxiliary storage device 414 includes, for example, a hard disc drive (HDD), a solid state drive (SSD), or the like.

The traveling device 415 includes wheels, axles, gears, motors, steering, batteries, charge and discharge mechanisms, and the like, and is a device mounted on the conveyance body 41 to perform traveling. Note that the traveling device 415 may constitute a light that functions as night illumination, a direction indicator that transmits the traveling direction of the conveyance body 41 to the surroundings, or the like.

The parcel compartment 416 is a place for loading an article conveyed by the conveyance body 41. In addition, a detection sensor (in one example, a gravity sensor) that detects the weight of the parcel compartment may be provided at the bottom of the parcel compartment 416. Moreover, an atomizer that sprays a chemical agent capable of disinfecting the parcel compartment 416 may be provided inside the parcel compartment 416. The imaging device 417 is a device that captures a video around the conveyance body 41, and is, for example, a camera that captures a color image.

The user I/F 418 is a device that enables transmission and reception of information between a user who has purchased an article, a consignee, and the conveyance body 41, and is, for example, a microphone, a touch panel, a speaker, a display device (for example, a liquid crystal display), or the like. Moreover, the user I/F 418 may include a temporary stand on which an article can be temporarily placed, a stand on which a smartphone used by the user is placed, and a flag for an arm or a flag signal used when taking a body language with respect to the surroundings.

The external I/F 419 is an interface for transmitting and receiving data. Moreover, the external I/F 419 is an interface for connecting (communicating) with external devices such as the user terminal 1, the e-commerce system 2, and the conveyance system 4. The external I/F 419 is, for example, a mobile phone (carrier) network such as 4G (fourth generation) or 5G (fifth generation), Intelligent Transport Systems (ITS) communication such as Dedicated Short-Range Communications (DSRC), near field communication by a Bluetooth (registered trademark) method, or the like. Moreover, for communication with the remote monitoring apparatus 42, for example, communication is performed by low delay audio/visual (AV) transmission capable of remotely controlling the conveyance body 41.

FIG. 19 is a block diagram illustrating an example of functions included in the conveyance body 41 according to the second embodiment. As illustrated in FIG. 19, the conveyance body 41 of the second embodiment includes a receiving unit 4111, a storage unit 4112, a travel control unit 4113, a reading unit 4114, a first determination unit 4115 (304), a first generation unit 4116 (305), a first transmitting unit 4117 (306), a monitoring unit 4118, an imaging unit 4119, an acquisition unit 4120 (308), a second determination unit 4121 (309), an output unit 4122, a second generation unit 4123 (310), a second transmitting unit 4124 (311), and an adjustment unit 4125 (312). Note that the function included in the conveyance body 41 is not limited thereto. Note that the same reference numerals as the functions of the information processing apparatus 3 included in the first embodiment are similar functional elements.

The receiving unit 4111 receives the delivery request transmitted from the remote monitoring apparatus 42. Specifically, the receiving unit 4111 receives the delivery request transmitted from the remote monitoring apparatus 42 on the basis of the delivery request of the article purchased by the user transmitted by the e-commerce system 2. The content received by the receiving unit 4111 is stored in the storage unit 4112. Note that the receiving unit 4111 may receive a delivery request transmitted from the e-commerce system 2.

The storage unit 4112 stores the content received by the receiving unit 4111. In addition, the storage unit 4112 stores the content of the travel control by the travel control unit 4113. Moreover, the storage unit 4112 stores the content read by the reading unit 4114. The storage unit 4112 stores the content determined by the first determination unit 4115 (304). In addition, the storage unit 4112 stores the content generated by the first generation unit 4116 (305). Moreover, the storage unit 4112 stores the content transmitted by the first transmitting unit 4117 (306). The storage unit 4112 stores the content monitored by the monitoring unit 4118.

In addition, the storage unit 4112 stores the content captured by the imaging unit 4119. Moreover, the storage unit 4112 stores the content acquired by the acquisition unit 4120 (308). The storage unit 4112 stores the content determined by the second determination unit 4121 (309). In addition, the storage unit 4112 stores the content output by the output unit 4122. Moreover, the storage unit 4112 stores the content generated by the second generation unit 4123 (310). The storage unit 4112 stores the content transmitted by the second transmitting unit 4124 (311). In addition, the storage unit 4112 stores the content adjusted by the adjustment unit 4125 (312). The storage unit 4112 is realized by, for example, the auxiliary storage device 414 or the like included in the conveyance body 41.

The travel control unit 4113 travels in cooperation with the traveling device 415 on the basis of a travel instruction transmitted from the remote monitoring apparatus 42. The content of the travel control by the travel control unit 4113 is stored in the storage unit 4112.

When the article purchased by the user is loaded into the parcel compartment 416, the reading unit 4114 reads the article information attached to the article. The content read by the reading unit 4114 is stored in the storage unit 4112.

The monitoring unit 4118 monitors the state of the article loaded into the parcel compartment 416. Specifically, the monitoring unit 4118 monitors a load collapse level indicating a degree of load collapse of the article, and a disinfection level indicating a disinfected state of inside of the parcel compartment and the parcel compartment itself. For example, the monitoring unit 4118 measures the center of gravity of the article when the conveyance body 41 is in the stationary state and the traveling state in cooperation with a gravity sensor provided in the parcel compartment, calculates the shift amount of the center of gravity on the basis of the measurement result, and monitors the load collapse level. In addition, the monitoring unit 4118 acquires, for example, information on the date and time and the number of times when the disinfection work was performed, and monitors the disinfection level on the basis of the acquired information, the elapsed time from when the disinfection work was performed, and the open/closed state of the parcel compartment 416. The content monitored by the monitoring unit 4118 is stored in the storage unit 4112.

The imaging unit 4119 captures an image around the conveyance body 41 in cooperation with the imaging device 417. For example, the imaging unit 4119 images the surroundings of a state when the conveyance body 41 is traveling. In addition, for example, after the conveyance body 41 arrives at the pickup site, the imaging unit 4119 performs imaging so that the state of the pickup site includes the open/closed state of the door, the recognition and behavior state of the consignee, and the like. The content imaged by the imaging unit 4119 is stored in the storage unit 4112. Note that the imaging result captured by the imaging unit 4119 may be transmitted to the remote monitoring apparatus 42 as needed or may be transmitted at a predetermined timing as long as the remote monitoring apparatus 42 is in a state of appropriately monitoring the conveyance body 41.

The output unit 4122 cooperates with the user I/F 418 to output information regarding the receipt of the article to the consignee. The output unit 4122, for example, at the timing when the parcel compartment 416 is open, cooperates with a speaker included in the conveyance body 41 to output a message "The article delivered today is a special article for a limited period of time. It is recommended to heat it before eating." In addition, for example, in a case where the type of the consignee determined by the second determination unit 4120 (309) is type 3, the output unit 4122 performs guidance display or audio output for a way to pick up and the like corresponding to slow behavior. For example, for a type of consignee who is slow to unlock the parcel compartment, "Input Authentication Number with Numeric Keypad, Open Door of Parcel Compartment, and Take out Package" is output.

As described above, the conveyance body 41 according to the second embodiment is a conveyance body that sequentially conveys one or more articles to the pickup site of the article, and acquires operation information representing an operation related to the consignee's receipt of the article at the pickup site. Then, the type of the consignee is determined on the basis of the operation information acquired. Moreover, the conveyance plan of the article to be conveyed to the next pickup site is adjusted in accordance with the determination result.

According to the configuration of the second embodiment described above, the type of the consignee is determined on the basis of the operation related to consignee's receipt of the article so that it is possible to grasp a delay factor occurring during conveyance. Moreover, the conveyance delay can be suppressed by adjusting the conveyance plan for conveyance to the next pickup site on the basis of the delay factor.

### (Modification)

In the above-described embodiment, the conveyance plan is generated on the basis of the position information of the delivery destination information included in the article information and the delivery date and time, but the conveyance plan generated by the first generation unit 305 is not limited thereto. For example, when the type of the consignee determined by the second determination unit 309 is recorded as the customer information, the first generation unit 305 may generate the conveyance plan on the basis of the type of the consignee.

Specifically, a conveyance plan is generated by adding, to the conveyance plan, the time corresponding to the type of the consignee determined by the second determination unit 309 when used in the past. For example, in a case where the time corresponding to the type 1 of a consignee is five minutes, a conveyance plan is generated by adding five minutes as a delay time to the time taken for conveyance from a customer of the type 1 to a customer for which conveyance is to be performed after the customer of the type 1.

As a result, it is possible for the customer to predict the delay time required for receiving the package in advance and to generate the conveyance plan by adding the delay time to the conveyance plan, so that a next customer to which an article is conveyed after the customer does not have to wait.

In addition, the type of the consignee stored in the customer information may be updated. For example, in a case where the second determination unit 309 determines the type of the consignee as type 3 as the usage state where the number of times of usage is equal to or less than a given number, the type of the consignee of the customer is stored as type 3 in the customer information. When the number of times of use of the customer increases and the second determination unit 309 determines that the type is another type (for example, type 1, type 2, or a type set as a next stage for a beginner, or the like), the type of the consignee stored in the customer information is updated. The type to be updated is not limited thereto, and may be type 1 to type 2, type 2 to type 1, or the like.

The program executed by the information processing apparatus 3 according to the present embodiment is provided by being recorded in a computer-readable recording medium such as a CD-ROM, a flexible disk (FD), a CD-R, or a digital versatile disk (DVD) as a file in an installable format or an executable format.

Moreover, the program executed by the information processing apparatus 3 according to the present embodiment may be stored in a computer connected to a network such as the Internet and provided by being downloaded via the network. In addition, the program executed by the information processing apparatus 3 of the present embodiment may be provided or distributed via a network such as the Internet. In addition, the program executed by the information processing apparatus 3 of the present embodiment may be provided by being incorporated in advance in the ROM 33 or the like.

Although some embodiments of the present disclosure have been described, these embodiments have been presented as examples, and are not intended to limit the scope of the invention. These embodiments can be implemented in various other forms, and various omissions, substitutions, and changes can be made without departing from the gist of the invention. These embodiments and modifications thereof are included in the scope and gist of the invention and are included in the invention described in the claims and the equivalent scope thereof.

### (Supplement)

The following techniques are disclosed by the above description of the embodiments.

### (Technique 1)

An information processing apparatus managing a conveyance body, the conveyance body sequentially conveying one or more articles to a pickup site of the article, the information processing apparatus comprising:
an acquisition unit configured to acquire, via the conveyance body, operation information representing an operation related to a consignee's receipt at the pickup site;
a determination unit configured to determine a type of the consignee on the basis of the operation information acquired by the acquisition unit; and
an adjustment unit configured to adjust a conveyance plan of an article to be conveyed to a next pickup site in accordance with a determination result of the determination unit.

### (Technique 2)

The information processing apparatus according to the technique 1, wherein the determination unit is configured to determine the type of the consignee in a case where an operation of receiving the article is not performed within a predetermined time after the conveyance body arrives at the pickup site.

### (Technique 3)

The information processing apparatus according to the technique 1 or 2, wherein
the conveyance body includes a first door for opening and closing a parcel compartment storing the article,
the acquisition unit is configured to acquire an open/closed state of the first door as the operation information via the conveyance body,
the determination unit is configured to determine that the consignee is of a first type in a case where the first door is not in an open state within a predetermined time after the conveyance body arrives at the pickup site, and
the adjustment unit is configured to, for a conveyance plan of an article to be conveyed to a next pickup site, delay a time at which the article arrives at the next pickup site by time corresponding to the first type.

### (Technique 4)

The information processing apparatus according to the technique 1 or 2, wherein
the acquisition unit is configured to acquire, as the operation information via the conveyance body, an open/closed state of a second door provided at an entrance of a house being the pickup site,
the determination unit is configured to determine that the consignee is of a second type in a case where the second door is not in an open state within a predetermined time after the conveyance body arrives at the pickup site, and
the adjustment unit is configured to, for a conveyance plan of an article to be conveyed to a next pickup site, delay a time at which the article arrives at the next pickup site by time corresponding to the second type.

### (Technique 5)

The information processing apparatus according to the technique 1, wherein
the acquisition unit is configured to acquire, from history information, a conveyance history being a past operation related to the consignee's receipt, the history information recording a conveyance history of an article using the conveyance body for each user,
the determination unit is configured to determine that the consignee is of a third type in a case where the acquisition unit cannot acquire the conveyance history of the consignee, and
the adjustment unit is configured to, for a conveyance plan of an article to be conveyed to a next pickup site, delay a time at which the article arrives at the next pickup site by time corresponding to the third type.

### (Technique 6)

The information processing apparatus according to any one of the techniques 3 to 5, further comprising a generation unit configured to generate an operation instruction to the conveyance body on the basis of a result of determination on the type of the consignee by the determination unit, the operation instruction indicating an instruction of an operation corresponding to the type of the consignee.

### (Technique 7)

A conveyance body sequentially conveying one or more articles to a pickup site of the article, the conveyance body comprising:
an acquisition unit configured to acquire operation information representing an operation related to a consignee's receipt at the pickup site;
a determination unit configured to determine a type of the consignee on the basis of the operation information acquired by the acquisition unit; and
an adjustment unit configured to adjust a conveyance plan of an article to be conveyed to a next pickup site in accordance with a determination result of the determination unit.

### (Technique 8)

A conveyance management system comprising:
a conveyance body configured to sequentially convey one or more articles to a pickup site of the article;
an information processing apparatus configured to manage the conveyance body;
wherein the conveyance management system connects the conveyance body and the information processing apparatus via a network,
an acquisition unit configured to acquire, via the conveyance body, operation information representing an operation related to a consignee's receipt at the pickup site;
a determination unit configured to determine a type of the consignee on the basis of the operation information acquired by the acquisition unit; and
an adjustment unit configured to adjust a conveyance plan of an article to be conveyed to a next pickup site in accordance with a determination result of the determination unit.

### EXPLANATIONS OF LETTERS OR NUMERALS

- 1: User Terminal
- 2: E-Commerce System
- 3: Information Processing Apparatus
- 4: Conveyance System
- 31: CPU
- 32: RAM
- 33: ROM
- 34: Auxiliary Storage Device
- 35: External I/F
- 36: Bus
- 41: Conveyance Body
- 42: Remote Monitoring Apparatus
- 301: Acceptance Unit
- 302: Storage Unit
- 303: Request Unit
- 304: First Determination Unit
- 305: First Generation Unit
- 306: First Transmitting Unit
- 307: Receiving Unit
- 308: Acquisition Unit
- 309: Second Determination Unit
- 310: Second Generation Unit
- 311: Second Transmitting Unit
- 312: Adjustment Unit

## Claims

1. An information processing apparatus managing a conveyance body, the conveyance body sequentially conveying one or more articles to a pickup site of the article, the information processing apparatus comprising:
an acquisition unit configured to acquire, via the conveyance body, operation information representing an operation related to a consignee's receipt at the pickup site;
a determination unit configured to determine a type of the consignee on the basis of the operation information acquired by the acquisition unit; and
an adjustment unit configured to adjust a conveyance plan of an article to be conveyed to a next pickup site in accordance with a determination result of the determination unit.

2. The information processing apparatus according to claim 1, wherein the determination unit is configured to determine the type of the consignee in a case where an operation of receiving the article is not performed within a predetermined time after the conveyance body arrives at the pickup site.

3. The information processing apparatus according to claim 1 or 2, wherein
the conveyance body includes a first door for opening and closing a parcel compartment storing the article,
the acquisition unit is configured to acquire an open/closed state of the first door as the operation information via the conveyance body,
the determination unit is configured to determine that the consignee is of a first type in a case where the first door is not in an open state within a predetermined time after the conveyance body arrives at the pickup site, and
the adjustment unit is configured to, for a conveyance plan of an article to be conveyed to a next pickup site, delay a time at which the article arrives at the next pickup site by time corresponding to the first type.

4. The information processing apparatus according to claim 1 or 2, wherein
the acquisition unit is configured to acquire, as the operation information via the conveyance body, an open/closed state of a second door provided at an entrance of a house being the pickup site,
the determination unit is configured to determine that the consignee is of a second type in a case where the second door is not in an open state within a predetermined time after the conveyance body arrives at the pickup site, and
the adjustment unit is configured to, for a conveyance plan of an article to be conveyed to a next pickup site, delay a time at which the article arrives at the next pickup site by time corresponding to the second type.

5. The information processing apparatus according to claim 1, wherein
the acquisition unit is configured to acquire, from history information, a conveyance history being a past operation related to the consignee's receipt, the history information recording a conveyance history of an article using the conveyance body for each user,
the determination unit is configured to determine that the consignee is of a third type in a case where the acquisition unit cannot acquire the conveyance history of the consignee, and
the adjustment unit is configured to, for a conveyance plan of an article to be conveyed to a next pickup site, delay a time at which the article arrives at the next pickup site by time corresponding to the third type.

6. The information processing apparatus according to claim 3, further comprising a generation unit configured to generate an operation instruction to the conveyance body on the basis of a result of determination on the type of the consignee by the determination unit, the operation instruction indicating an instruction of an operation corresponding to the type of the consignee.

7. The information processing apparatus according to claim 4, further comprising a generation unit configured to generate an operation instruction to the conveyance body on the basis of a result of determination on the type of the consignee by the determination unit, the operation instruction indicating an instruction of an operation corresponding to the type of the consignee.

8. The information processing apparatus according to claim 5, further comprising a generation unit configured to generate an operation instruction to the conveyance body on the basis of a result of determination on the type of the consignee by the determination unit, the operation instruction indicating an instruction of an operation corresponding to the type of the consignee.

9. A conveyance body sequentially conveying one or more articles to a pickup site of the article, the conveyance body comprising:
an acquisition unit configured to acquire operation information representing an operation related to a consignee's receipt at the pickup site;
a determination unit configured to determine a type of the consignee on the basis of the operation information acquired by the acquisition unit; and
an adjustment unit configured to adjust a conveyance plan of an article to be conveyed to a next pickup site in accordance with a determination result of the determination unit.

10. A conveyance management system comprising:
a conveyance body configured to sequentially convey one or more articles to a pickup site of the article;
an information processing apparatus configured to manage the conveyance body;
wherein the conveyance management system connects the conveyance body and the information processing apparatus via a network,
an acquisition unit configured to acquire, via the conveyance body, operation information representing an operation related to a consignee's receipt at the pickup site;
a determination unit configured to determine a type of the consignee on the basis of the operation information acquired by the acquisition unit; and
an adjustment unit configured to adjust a conveyance plan of an article to be conveyed to a next pickup site in accordance with a determination result of the determination unit.
